Europäisches Patentamt

European Patent Office

Office européen des brevets

(19)

(11) EP 1 271 740 A1

(12) EUROPEAN PATENT APPLICATION
published in accordance with Art. 158(3) EPC

(43) Date of publication:
02.01.2003 Bulletin 2003/01

(51) Int Cl.7: H02J 3/00

(21) Application number: 01912145.8

(22) Date of filing: 07.03.2001

(86) International application number:
PCT/JP01/01767

(87) International publication number:
WO 01/067578 (13.09.2001 Gazette 2001/37)

(84) Designated Contracting States:
AT BE CH CY DE DK ES FI FR GB GR IE IT LI LU
MC NL PT SE TR
Designated Extension States:
AL LT LV MK RO SI

(30) Priority: 10.03.2000 JP 2000067657
25.12.2000 JP 2000393829

(71) Applicant: Mark.Tech Co., Ltd.
Tokyo 105-0013 (JP)

(72) Inventors:
• MASUDA, Yoshinobu c/o MARK.TECH Co., Ltd.
Tokyo 105-0013 (JP)
• SASAKI, Jo c/o MARK.TECH Co., Ltd.
Tokyo 105-0013; (JP)

(74) Representative: Dr. Weitzel & Partner
Friedenstrasse 10
89522 Heidenheim (DE)

(54) **ELECTRICITY BILL CONTROL DEVICE AND RECORDING MEDIUM THEREFOR**

(57)     In addition to a dissociation ratio being calculated with a load pattern recognition unit 3 based on sample data of the amount of electrical power in an electrical power load accumulated in a sample data accumulation unit 2, adjusted electrical power and a target coefficient are calculated with an adjusted electrical power arithmetic processing unit 5 and a target coefficient arithmetic processing unit 7. In addition, a demand period target value arithmetic processing unit 8 calculates a target value of the amount of electrical power used by an electrical power load for each demand period based on the dissociation ratio, adjusted electrical power and target coefficient. The amount of electrical power used by the electrical power load is then controlled by a demand control unit 9 and load control unit 10 based on this target value.

FIG. 1

Printed by Jouve, 75001 PARIS (FR)

**Description**

**TECHNICAL FIELD**

The present invention relates to an electricity charge management apparatus and its recording medium that manages electricity charges levied corresponding to the amount of electrical power used.

**BACKGROUND ART**

Demand controllers that suppress peak electrical power demand are well known in the prior art as a method for managing electrical power use by electrical power users. Demand controllers are used for the purpose of managing or controlling the load so that it does not exceed a target value by defining that target value for the maximum value of the average electrical power used for each prescribed amount of time that is used by electrical power users. Thus, the times at which alarm notification or electrical power control is performed from the demand controller are concentrated in summer in nearly all buildings. Consequently, in the case a user installs a demand controller for the purpose of reducing the amount of electrical power or the amount of $CO_2$ emissions, the amount of the decrease in electrical power (or $CO_2$) throughout the year is low, thus resulting in a low degree of satisfaction with respect to achieving the purpose of their use.

In addition, nearly all electrical power users are for the first time made aware of their electricity charges as a result of a meter readout or invoice being sent from an electric power company. Consequently, even if they earnestly turn off lights or set the temperatures of their air-conditioners higher in the summer in order to save electricity charges, they were unable to know in advance how much electricity charges were reduced due to those actions. In addition, in the case of the amount of electrical power that serves as the basis for calculating electricity charges is controlled by a demand controller, it is difficult to set a goal for reduction of electricity charges due to the above circumstances.

Among the demand electrical power prediction apparatuses of the prior art, as in, for example, Japanese Unexamined Patent Application, First Publication No. 4-372046, a demand electrical power prediction apparatus is indicated that uses a neural network which considers discontinuous influential factors in order to control the amount of electrical power that serves as the basis for calculation of electricity charges. However, this apparatus only predicts demand electrical power, and there is no methods indicated whatsoever for reducing electricity charges.

Moreover, among corporations currently making comprehensive proposals for conserving energy, there are some corporations proposing replacing each of the lighting and motive power loads with highly efficient equipment and automatically controlling the amount of electrical power used as methods for conserving energy in a single building. In the case such corporations actually perform the construction work described above, it is necessary for said corporation to measure the respective amount of electrical power before and after each job is performed and then verify the resulting energy conservation effects. However, in the case the operating status of the load differs before and after construction work, in addition to requiring long-term measurement since it is not easy to accurately verify energy conservation effects, there is an increase in the resulting costs. Consequently, the number of years required to recover energy conservation costs relative to the monetary effects of energy conservation is prolonged, and users are therefore hesitant to invest in such energy conservation measures.

**DISCLOSURE OF THE INVENTION**

In consideration of the above circumstances, an object of the present invention is to provide an electricity charge management apparatus and its recording medium that is able to manage electricity charges by setting a target value for electricity charges in a certain facility, or the amount of electrical power used or $CO_2$ of the total electrical power load, in a prescribed time period in monthly or yearly units, and controlling the amount of electrical power used and maximum electrical power of the electrical power load based on that target value.

In addition, an object of the present invention is to provide an inexpensive electricity charge management apparatus and its recording medium that is able to enhance the awareness of energy conservation among electrical power users and have a simplified structure by setting the above target value for the amount of electrical power used in terms of the amount of $CO_2$ emissions, and displaying predicted values of the amount of electrical power used and amount of $CO_2$ emissions at the end of the month corresponding to the manner of electrical power usage.

Moreover, an object of the present invention is to provide an electricity charge management apparatus and its recording medium that is capable of centralized management by remote control of electricity charges levied for the amount of electrical power used by electrical power loads installed in a plurality of facilities.

In order to achieve the above-mentioned object, the present invention provides with an electricity charge management apparatus, comprising: a setting means that sets a target value of an amount of electrical power used during a prescribed time period by an electrical power load; a used electrical power accumulation means that accumulates the value of the amount of electrical power used in a unit time obtained by fractionating said prescribed time period by said electrical power load; a unit time target value arithmetic processing means that calculates the target value of the amount of electrical power used for each unit time based on the target value of the amount of electrical power used during said prescribed time period and the amount of electrical power used of each unit time; and a load control means that controls the amount of electrical power used by said electrical power load based on said calculated target value of the amount of electrical power used during each unit time.

Here, a "prescribed period of time" preferably coincides with the units of the electricity charge invoice period, and for example, may extend from the beginning of a month to the end of a month. In addition, "unit time" refers to the prescribed time unit that adjusts the amount of electrical power, and preferably coincides with the time period (demand period) that defines maximum electrical power for determining the basic charge of electricity charges.

According to the present invention, electricity charges can be managed by setting a target value for electricity charges in a facility, or for the amount of electrical power used or $CO_2$ of the total electrical power load, in a prescribed time period in monthly or yearly units, and controlling the amount of electrical power used and maximum electrical power of the electrical power load based on that target value.

In addition, the present invention further provides with the electricity charge management apparatus that further comprises: a dissociation ratio calculating means that calculates the dissociation ratio, which is the ratio of the target amount of electrical power during each unit time to the average amount of electrical power used of the unit time, based on said target value of the amount of electrical power used during said prescribed time period and the value of the amount of electrical power used during each said unit time, wherein: said unit time target value arithmetic processing means calculates the target value of the amount of electrical power used during each unit time while also considering said dissociation ratio.

In addition, the present invention further provides with the electricity charge management apparatus that further comprises: a used electrical power prediction means that predicts the amount of electrical power used during said prescribed time period by said electrical power load based on the value of the amount of electrical power used during each said unit time; and an adjusted electrical power calculation means that calculates the adjusted amount of electrical power based on the difference between said predicted amount of electrical power used and said target value of the amount of electrical power used during said prescribed time period, and the remaining electrical power adjustment time, wherein: said unit time target value arithmetic processing means calculates the target value of the amount of electrical power used during each unit time while considering said adjusted amount of electrical power.

In addition, the present invention further provides with the electricity charge management apparatus, wherein; a coefficient that considers the environmental conditions of the facility is additionally set in said setting means, and said unit time target value arithmetic processing means calculates the target value of the amount of electrical power used during each unit time based on the target value of the amount of electrical power used during said prescribed time period, the amount of electrical power used during each unit time, and said coefficient that considers the environmental conditions of the facility; and said electricity charge management apparatus further comprises: a load control means that controls the amount of electrical power used by said electrical power load based on said calculated target value of the amount of electrical power used during each unit time.

Here, a "coefficient that additionally considers the environmental conditions of a facility" refers to a coefficient that represents conditions having an effect on changes in the amount of electrical power used, such as outdoor air temperature, indoor air temperature, humidity and frequency of facility access.

In addition, the present invention further provides with the electricity charge management apparatus that further comprises: a limiting condition setting means that sets limiting conditions consisting of the upper and lower limit values of said coefficient that considers the environmental conditions of the facility, and the status in said installed facility corresponding to said upper and lower limit values; and a coefficient calculation means that calculates said coefficient that considers the environmental conditions of the facility corresponding to the status as detected by a detection means that detects the status in the installed facility of said electrical power load; wherein the coefficient calculated by said coefficient calculation means is set as a coefficient that considers the environmental conditions of the facility.

Furthermore, the electricity charge management apparatus of the present invention may be additionally provided with a detection means that detects the facility operating status at the installation site of the above electrical power load.

In addition, the present invention further provides with the electricity charge management apparatus that further comprises: a specific electrical power load setting means that sets an interruption ratio that represents the ratio at which supplied electrical power can be interrupted according to a specific electrical power load among said electrical power load; a specific electrical power load electrical power accumulation means that accumulates the value of the amount of electrical power used during each unit time by said specific electrical power load; and an interruptible electrical power arithmetic processing means that predicts the amount of electrical power used during said prescribed time period by said specific electrical power load by using the value of the amount of electrical power accumulated in said specific electrical power load electrical power accumulation means, and calculates the interruptible amount of electrical power for which electrical power supplied to said specific electrical power load can be interrupted from the current time until expiration of a prescribed time period based on said predicted amount of electrical power used and said interruption ratio, while additionally judging whether or not electrical power adjustment has reached a threshold by using said interruptible amount of electrical power, and generating a warning in the case the threshold is judged to have been reached.

In addition, the present invention further provides with the electricity charge management apparatus, wherein; in the case long-term electricity charge has been set for said target value, said electricity charge is assigned to each prescribed time period in said prescribed time period units, and the target value of the electricity charge of each said assigned prescribed time period is converted to an amount of electrical power after which the amount of electrical power used by said electrical power load is controlled based on said converted amount of electrical power.

In addition, the present invention further provides with a monitoring apparatus, which manages a plurality of the electricity charge management apparatuses, comprises: a means of assigning a target value of a prescribed time period to each electricity charge management apparatus in accordance with a preset distribution ratio by setting a target value of a prescribed time period that summarizes each target value set in the plurality of electricity charge management apparatuses; and a means of changing said distribution ratio based on each predicted amount of electrical power predicted by said plurality of electricity charge management apparatuses, each interruptible amount of electrical power calculated by said plurality of electricity charge management apparatuses, and each target value of said prescribed time period.

In addition, the present invention further provides with an electricity charge management system comprised by: a plurality of the electricity charge management apparatuses, a plurality of monitoring apparatuses that manage said plurality of electricity charge management apparatuses, and a general monitoring apparatus that summarily manages said plurality of monitoring apparatuses, wherein: said monitoring apparatuses comprise: a means of assigning a target value of a prescribed time period that summarizes each target value set in the plurality of electricity charge management apparatuses to be monitored, that is assigned to each electricity charge management apparatus in accordance with a preset distribution ratio by setting a target value of a prescribed time period assigned by said general monitoring apparatus; and a means of changing said distribution ratio based on each predicted amount of electrical power predicted by said plurality of electricity charge management apparatuses to be monitored, each interruptible amount of electrical power calculated by said plurality of electricity charge management apparatuses, and each target value of said prescribed time period; and said general monitoring apparatus comprises: a means of assigning a target value of a prescribed time period to each monitoring apparatus in accordance with a preset distribution ratio by setting a target value of a prescribed time period that summarizes each target value set with said plurality of monitoring apparatuses; and a means of changing said distribution ratio for each monitoring apparatus based on the predicted amount of electrical power and each interruptible amount of electrical power sent from said plurality of monitoring apparatuses, and each target value of a prescribed time period that summarizes each target value set with said plurality of monitoring apparatuses; wherein, said plurality of electricity charge management apparatuses, said plurality of monitoring apparatuses and said general monitoring apparatus are connected so as to be able to communicate.

In addition, the present invention further provides with a computer-readable recording medium on which an electricity charge management program has been recorded that manages electricity charges according to the amount of electrical power used during a prescribed time period by an electrical power load; wherein; said electricity charge management program runs in a computer: a step for accumulating the value of the amount of electrical power used in a unit time obtained by fractionating said prescribed time period by said electrical power load; a step for calculating the target value of the amount of electrical power used during each unit time based on a set target value of the amount of electrical power used during said prescribed time period, a coefficient that considers the environmental conditions of a facility, and the amount of electrical power used during each unit time; and a step for controlling the amount of electrical power used by said electrical power load based on said calculated target value of the amount of electrical power used during each unit time.

## BRIEF DESCRIPTION OF THE DRAWINGS

Fig. 1 is a block diagram showing the constitution of an electricity charge management apparatus as claimed in the present invention.

Fig. 2 is a drawing showing an example of the average values and dissociation ratio of sample data obtained at the same times calculated by the electricity charge management system.

Fig. 3 is a drawing showing an example of target coefficients calculated by the electricity charge management apparatus.

Fig. 4 is a flow chart showing the operation of the electricity charge management apparatus.

Fig. 5 is a flow chart showing the operation of the electricity charge management apparatus.

Fig. 6 is a drawing showing the general constitution of an electricity charge management system using the electrical charge management apparatus.

## DESCRIPTION OF PREFERRED EMBODIMENT

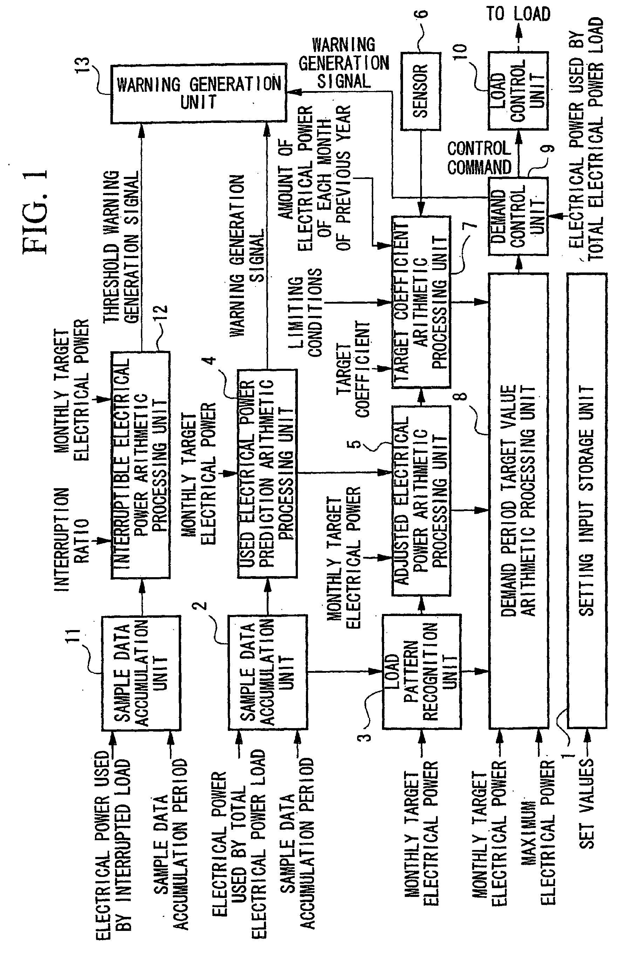

The following provides an explanation of an embodiment of the electricity charge management apparatus as claimed in the present invention with reference to the drawings. Fig. 1 is a drawing showing the constitution of an electricity charge management apparatus in the present embodiment. In this drawing, reference symbol 1 indicates a setting input storage unit in which various parameters indicated below are set and stored by a user.

Furthermore, in the present and following embodiments, the prescribed time period serving as the electricity charge invoice period is one month extending from the beginning of the month to the end of the month, and the unit time obtained by fractionating this prescribed time period is explained as the demand period. Furthermore, the demand period is explained separately.

(1) Monthly Target Electrical Power

This refers to the target value of the amount of electrical power used from the beginning of the month to the end of the month (Kwh). The total electrical power load installed in a certain facility such as a factory, building or ordinary home is set.

The monthly target electrical power is converted or calculated from any of the amount of electrical power, electricity charge or amount of carbon dioxide (amount of carbon dioxide emissions) that serves as the target value in the prescribed time period, and is set and stored in setting input storage unit 1.

Furthermore, in the case the amount of electrical power is set as the target value of a given month, the set amount of electrical power is already the monthly target electrical power.

In addition, in the case electricity charges are set as the target value of a given month, the electricity charge management processing to be described later is performed after converting the set electricity charges to an amount of electrical power. In order to convert to an amount of electrical power, setting input storage unit 1 converts input electricity charges to the monthly target electrical power using basic charge data for one month that has been preset and stored in memory as well as a charge table determined corresponding the amount of electrical power used in one month, and then sets and stores that amount in memory. The following indicates an example of converting from a monthly electricity charge target amount to the monthly target electrical power. In the case the basic charge is determined by the basic charge unit price, power factor discount and maximum power to be described later according to the contract with the electrical power supplier as indicated with the following formula:

$$\text{Basic charge} = \text{basic charge unit price} \times \text{power factor}$$

$$\text{discount} \times \text{maximum electric power,}$$

the basic charge determined with the above formula is preset and stored as basic charge data. In addition, in the case the usage charge unit price per 1 Kwh is fixed, conversion from the target value electricity charge set as the target value of a given month to the monthly target electrical power is made using the following formula:

$$\text{Monthly target electrical power} = (\text{target electricity}$$

$$\text{charge} - \text{basic charge})/\text{usage charge unit price}$$

Furthermore, the conversion from monthly electricity charge target amount to monthly electrical power may be determined according to the contract with the electrical power supplier, and for example, the usage amount unit price may not be constant, but rather may change according to the method in which electricity charges are levied such as in the form of a meter rate system based on the season, time bands or the amount of electrical power used. Accordingly, the actual conversion from electricity charges to monthly target electrical power is performed corresponding to contract contents.

In addition, in the case the amount of carbon dioxide (t) is set as the target value of a given month, the electricity charge management processing to be described later is performed after converting to an amount of electrical power by using a formula such as Kwh x coefficient = 1 t. Furthermore, the "coefficient" is a value that is set according to the electrical power situation of each country.

In addition, in the case the amount of electrical power used over a long period of time, such as a calendar year, fiscal year, fiscal half or fiscal quarter, is set as the target value, the electricity charge the electricity charge management processing to be described later is performed after distributing the set amount of electrical power used over a long period of time among the amounts of electrical power for each month. An example of processing performed by setting input storage unit 1 for distributing the amount of electrical power used over a long period of time among the amounts of electrical power of each month is shown below. Furthermore, the amount of electrical power used in the current year is set here. Setting input storage unit 1 calculates the average amount of electrical power of one month of the previous year using the amount of electrical power of each month of the previous year which is the set value to be described later. For example, if the total amount of electrical power used during the previous year is taken to be 120,000 (Kwh), then the average amount of electrical power of one month during the previous year becomes 10,000 (Kwh). Next, setting input storage unit 1 determines the ratio of the amount of electrical power of each month of the previous year to the average amount of electrical power of one month of the previous year for each month using the following formula:

$$\text{Ratio (n)} = \text{amount of electrical power of month n of the previous year / average amount of electrical power of one month of previous year}$$

where, n is an integer from 1 to 12. Continuing, setting input storage unit 1 distributes the amount of electrical power used in the current year among the amounts of electrical power of each month using ratio (n) and the set amount of electrical power used in the current year according to the following formula:

$$\text{Target amount of electrical power of month n of current year} = \text{ratio (n)} \times \text{average amount of electrical power of one month in current year}$$

In addition, in the case electricity charges over a long period of time, such as a calendar year, fiscal year, fiscal half or fiscal quarter, are set as the target value, the electricity charge management processing to be described later is performed after converting the electricity charges for the set long period of time to the amount of electrical power used during that long period of time, and then distributing among the amounts of electrical power of each month. Furthermore, processing for this purpose can be performed by using the amount of electrical power of each month of the previous year, which is the set value to be described later, basic charge data and a charge table determined according to the amount of electrical power used. For example, in the case the usage charge unit price per 1 Kwh is fixed, the conversion from the target electricity charge of the current year (period of one year) to the target amount of electrical power over a long period of time is in accordance with the following formula:

$$\text{Target amount of electrical power over long period of time} = (\text{target electricity charge over long period of time} - \text{basic charge} \times \text{set number of months}) / \text{usage charge unit price}$$

This target amount of electrical power over a long period of time can then be distributed among each month corresponding to the amount of electrical power of each month of the previous year.

In addition, in the case there is information relating to the electricity charge of each month of the previous year, the electricity charge management processing to be described later may be performed by distributing the electricity charge over a set long period of time among the electricity charges of each month corresponding to the actual results of electricity charges of each month of the previous year, and then converting the distributed electricity charge of each month to the amount of electrical power used in that month.

In addition, in the case the amount of carbon dioxide over a long period of time is set as the target value, the electricity charge management processing may be similarly performed by converting the amount of carbon dioxide of the set long period of time to the amount of electrical power used over a long period of time, and then allocating among the amounts of electrical power of each month. In addition, in the case there is information relating to the amount of carbon dioxide used in each month of the previous year, the electricity charge management processing to be described later may be performed by distributing the amount of carbon dioxide of the set long period of time among the amounts of carbon dioxide of each month corresponding to the actual results of the electrical charges of each month of the previous year, and then converting the distributed amount of carbon dioxide of each month to the amount of electrical power used of that month.

Furthermore, from the viewpoint of managing electricity charges, it is preferable that the above-mentioned "beginning of the month" and "end of the month" coincide with the electricity charge invoice period. Namely, the "beginning of the month" is preferably taken to be the day after the day on which the meter is read equivalent to the first day of the electricity charge invoice period, while the "end of the month" is preferably the day on which the meter is read.

(2) Sample Data Accumulation Period

This refers to the period during which measured values of electrical power actually used by the above electrical power load (sample data) are retained.

(3) Minimum Electrical Power and Maximum Electrical Power

Minimum electrical power is a value for judging whether or not each of the above sample data is reflected in the electricity charge management processing. Sample data that is lower than the set minimum electrical power is not reflected in the electricity charge management processing.

Maximum electrical power is an electrical power value determined according to the contract with the electrical power supplier. Here, maximum electrical power is the maximum value of the average electrical power used within the demand period to be described later.

(4) Target Coefficient

This refers to a coefficient for increasing or decreasing the demand period target value (to be described later) for a desired day or period within a one month period corresponding to the status of the installation site of the electrical power load, namely by taking into consideration the environmental conditions of the facility. The means for determining the target coefficient may be manual or automatic.

In the case of a manual means, in the case, for example, the managed electrical power load tends to use a small amount of electrical power from day 1 to day 10, but tends to use a large amount of electrical power from day 20 to the end of the month, the value of the target coefficient should be set to less than 100% from day 1 to day 10, 100% for day 11 to day 19, and more than 100% from day 20 to the end of the month. The target coefficient in the case of an automatic means is determined in the setting of the limiting conditions of (5).

In addition, the "demand period" is a prescribed time unit that adjusts the amount of electrical power. In addition, from the viewpoint of managing electricity charges, the "demand period" preferably coincides with the time period that determines the maximum electrical power for determining the basic charge of electricity charges (for example, 30 minute units or 15 minute units). Furthermore, the following provides an explanation in which the demand period is 30 minutes.

(5) Limiting Conditions

Limiting conditions are set in the case the above target coefficient is set automatically. These limiting conditions are set according to values output from a means that detects the status of each electrical power load at the installation site at the subject upper limit and lower limit values.

(6) Interruption Ratio

This refers to the ratio that is used when calculating the amount of electrical power for which the electrical power supplied to a specific electrical power load can be interrupted from the present time to the end of the month relative to the set monthly target electrical power (interruptible electrical power). It represents the ratio by which the electrical power supplied to said specific electrical power load can be interrupted for one month from the beginning of the month to the end of the month.

Here, "specific electrical power load" refers to the electrical power load that does not have an effect at the facility at which electricity charge management is performed even if the supply of electrical power is interrupted. For example, in the case the electricity charge management apparatus is installed in a factory and so forth, the "specific electrical power load" refers to an electrical power load, such as an air-conditioner, that does not have an effect on production.

In addition, interruption of electrical power to the specific electrical power load may be performed by switching the electrical power on and off or by reducing the supplied electrical power to the specific electrical power load.

(7) Control Time Band

This refers to the time band during which electricity charge management is performed in consideration of the load pattern (to be described later).

(8) Amount of Electrical Power of Each Month of Previous Year

This refers to the amount of electrical power that was actually used in each month of the previous year.

Reference symbol 2 indicates a sample data accumulation unit that sequentially records as sample data the amount of electrical power used by the total electrical power load during a prescribed demand period (taken here to be 30 minutes) based on the used electrical power value of the total electrical power load in a certain facility as measured by a wattmeter not shown. In addition, sample data accumulation unit 2 accumulates the recorded amounts of electrical power during a sample data accumulation period input to setting input storage unit 1. The oldest of this accumulated sample data is sequentially deleted when new data is input after the sample data accumulation period has elapsed.

Furthermore, the "demand period" referred to here coincides with the time period that determines the maximum electrical power for determining the basic charge of electricity charges.

Reference symbol 3 indicates a load pattern recognition unit that calculates the dissociation ratio of each demand period based on sample data of the amount of electrical power used of the total electrical power load accumulated in sample data accumulation unit 2, and the monthly target electrical power of the total electrical power load input to setting input storage unit 1, according to formula (1) shown below.

$$\text{Dissociation ratio = Same time sample data average}$$

$$\text{value/average target amount of electrical power} \qquad (1)$$

(provided that the average target amount of electrical power = monthly target electrical power/number of demand periods of that month).

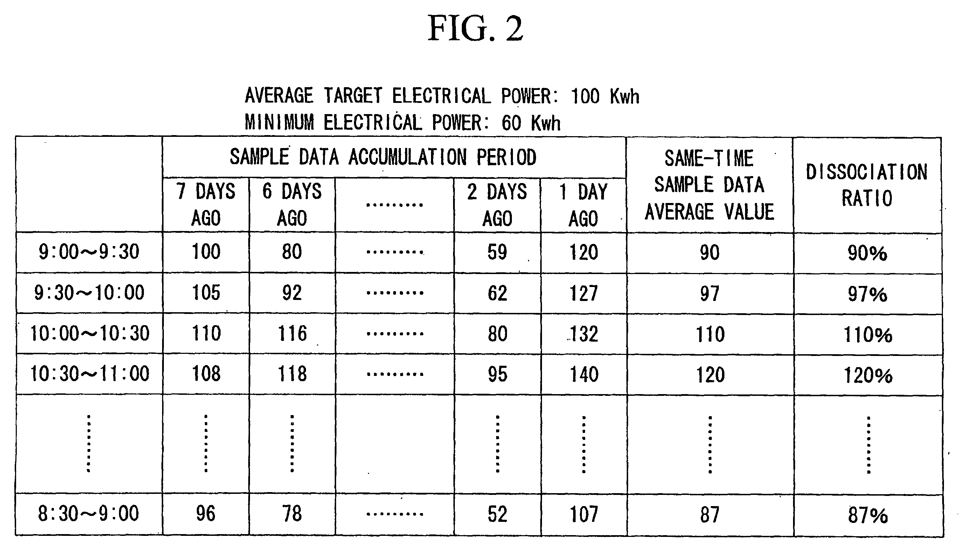

In formula (1), same time sample data average value refers to the average value of sample data during the sample data accumulation period of each demand period (see Fig. 2). Here, when determining the same time sample data average value, in the case there is sample data that is less than the minimum electrical power input to setting input storage unit 1, that sample data is not reflected in the same time sample data average value. Namely, as shown in Fig. 2, for example, in the case the minimum electrical power is 60 Kwh, when determining the same time sample data average value for "9:00-9:30", the average value is calculated after eliminating the sample data of "2 days ago" (59 Kwh).

In addition, the number of demand periods in formula (1) refers to the number of demand periods in the current month. Namely, in the case the demand period is 30 minutes, for example, then the number of demand periods per day becomes 24 hours (= 1440 minutes)/30 minutes = 48, and if there is assumed to have been 31 days in the current month, then the number of demand periods in that month becomes 48 x 31 = 1488 demand periods.

Here, the dissociation ratios of each demand period in the case of the average target electrical power being 100 (Kwh) are shown in Fig. 2. In this manner, changes in the daily amounts of electrical ppwer used by the managed electrical power load (load pattern) can be recognized by determining the dissociation ratio of each demand period.

Reference symbol 4 indicates a used electrical power prediction arithmetic processing unit that predicts the amount of electrical power used for one month at the end of the current month based on sample data accumulated by sample data accumulation unit 2 (the predicted amount of electrical power is hereinafter referred to as monthly predicted electrical power). Here, the prediction method of monthly predicted electrical power uses a technique used in the prior art such as the least square method or the moving average method. Moreover, a technique that uses a neural network may also be used as indicated in, for example, Japanese Patent Application No. 4-372046. Here, the value obtained by determining the average electrical power used per day by dividing the total of the sample data accumulated in sample data accumulation unit by the number of days of the sample data accumulation period (namely, 7), and then multiplying the total number of days of the current month by that amount of electrical power is taken to be the monthly predicted electrical power. Furthermore, this prediction arithmetic processing is performed for each demand period.

In addition, the amount of electrical power used for one month at the end of the current month predicted by used electrical power prediction arithmetic processing unit 4 is displayed on a display apparatus not shown. At this time, said predicted amount of electrical power used may also be displayed after converting to the amount of $CO_2$ emissions.

Reference symbol 5 indicates an adjusted electrical power arithmetic processing unit that calculates the adjusted amount of electrical power per demand period based on the monthly target electrical power of the total electrical power load input to setting input storage unit 1 and the monthly predicted electrical power calculated by used electrical power prediction arithmetic processing unit 4. More specifically, the adjusted amount of electrical power is calculated according to formula (2) shown below.

$$\text{Adjusted amount of electrical power = (Monthly predicted}$$

$$\text{electrical power - monthly target electrical power)/}$$

$$\text{remaining electrical power adjustment period} \qquad (2)$$

Here, "electrical power adjustment time" refers to a time period or time band during which electrical power can be adjusted from the current time to the end of the current month. The adjusted amount of electrical power per demand period changes according to the remaining number of days serving as the management unit of the amount of electrical power used and the remaining demand periods. Therefore, suitable electrical power adjustments can be made by calculating the adjusted amount of electrical power per demand period corresponding to the remaining electrical power adjustment period.

The remaining electrical power adjustment period is taken to be, for example, the number of demand periods included in the remaining control time band of the current month.

In addition, a specific example of this is as follows:

$$\text{Remaining electrical power adjustment period = (number}$$

$$\text{of demand periods equal to or greater than the minimum}$$

$$\text{electrical power within the control time band on the past}$$

$$\text{prescribed number of days/past prescribed number of days)}$$

$$\text{x remaining number of days}$$

Here, the "remaining number of days" refers to the number of days from the current day to the end of the month. As a result, the number of demand periods included in the control time band that remain after subtracting non-operating time bands during which the amount of electrical power is not controlled, such as holidays or dormant time bands, can be accurately determined. Furthermore, the above-mentioned "number of demand periods" is determined by using data accumulated in sample data accumulation unit 2.

Reference symbol 6 indicates a sensor that detects the status at the location where the electrical power load is installed. Here, a temperature sensor that detects air temperature is used for sensor 6. In addition, a personnel sensor that detects the number of persons, an access management apparatus that recognizes the number of parked cars in a parking lot or an illumination sensor and so forth may also be used besides a temperature sensor. Alternatively, any apparatus that is able to directly or indirectly detect the operating status of equipment may be used, examples of which include an apparatus that manages personnel access or an apparatus that manages sales.

Reference symbol 7 indicates a target coefficient arithmetic processing unit that outputs the target coefficient set in setting input storage unit 1 or the target coefficient calculated according to the environment of the installation site of the electrical power load. Here, which target coefficient is output is pre-selected by the user. In the case the user has selected the target coefficient calculated by target coefficient arithmetic processing unit 7, target coefficient arithmetic processing unit 7 outputs the target coefficient corresponding to the measured value of sensor 6 based on the limiting conditions input to setting input storage unit 1. Here, since a temperature sensor is used as the means for detecting the status at the installation site of the electrical power load, air temperatures are respectively set as the values corresponding to the upper and lower limit values of the limiting conditions.

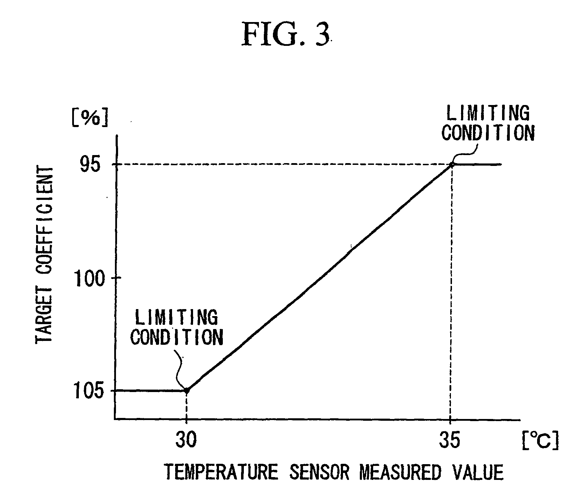

In the case, for example, an upper limit value of 105%, lower limit value of 95%, air temperature during the upper limit value of 30°C and air temperature during the lower limit value of 35°C are set as the limiting conditions, as shown in Fig. 3, target coefficient arithmetic processing unit 7 suitably determines the relationship between air temperature and target coefficient between the lower limit value and upper limit value by linear interpolation and so forth. It then outputs target coefficients corresponding to the measured value of sensor 6 in accordance with the relationship it has determined.

Reference symbol 8 indicates a demand period target value arithmetic processing unit that calculates the target value of the amount of electrical power used by the total electrical power load for each demand period (to be referred to as the demand period target value) based on the average target electrical power and dissociation ratio determined by load pattern recognition unit 3, the adjusted amount of electrical power per demand period determined by adjusted electrical power arithmetic processing unit 5, and the target coefficient output from target coefficient arithmetic processing unit 8. More specifically, demand period target value is calculated according to formula (4) shown below.

$$\text{Demand period target value = average target electrical}$$

$$\text{power x dissociation ratio x target coefficient - adjusted}$$

$$\text{amount of electrical power} \tag{4}$$

Furthermore, in the case the calculated demand period target value exceeds the maximum electrical power stored in setting input storage unit 1, demand period target value arithmetic processing unit 8 outputs the maximum electrical power instead of the demand period target value.

Reference symbol 9 indicates a conventionally used demand control unit. Demand period control unit 9 judges whether or not load control is necessary by using the demand period target value calculated by demand period target value arithmetic processing unit 8, and outputs a control command when control is required. Furthermore, a used electrical power reduction signal (signal that reduces the electrical power used by the electrical power load) corresponding to the amount of excess electrical power usage is output as a control command.

Reference symbol 10 indicates a load control unit that decreases the electrical power used by an electrical power load not shown corresponding to a used electrical power reduction signal when that used electrical power reduction signal is output from demand control unit 9. Furthermore, The method for decreasing the electrical power used is suitably determined corresponding to the type of electrical power load controlled. For example, in cases in which there is no problem with interrupting the supply of electrical power to the electrical power load, the supplied electrical power is interrupted, while in cases in which there is a problem, the supplied electrical power is lowered or the amount of electrical power used by the electrical power load is lowered (for example, by lowering the air flow rate in the case of an air-conditioner, or by lowering the illumination intensity in the case of lighting.

Here, in load control unit 10, the above control of the reduction in used electrical power may be performed intermittently by switching on and off the used electrical power reduction signal output from demand control unit 9 at a prescribed rate. Moreover, the rate at which the used electrical power reduction signal is switched on and off may be changed corresponding to the adjusted amount of electrical power calculated in adjusted electrical power arithmetic processing unit 5 and the target coefficient output from target coefficient arithmetic processing unit 8.

Reference symbol 11 indicates a sample data accumulation unit. Although this unit is the same as the previously mentioned sample data accumulation unit 2, sample data accumulation unit 11 accumulates sample data of a predetermined specific electrical power load of the total electrical power load.

Reference symbol 12 indicates an interruptible electrical power arithmetic processing unit that calculates the interruptible amount of electrical power based on the sample data accumulated in sample data accumulation unit 11 and the interruption ratio input to setting input storage unit 1. This interruptible amount of electrical power is the amount of electrical power that can be interrupted in a specific electrical power load from the current day to the end of the month, and more specifically, is calculated according to formula (5) shown below.

$$\text{Interruptible amount of electrical power = (Monthly}$$

$$\text{predicted electrical power of a specific electrical}$$

$$\text{power load - actual amount of electrical power used by a}$$

specific electrical power load) x interruption ratio　　　　　　　　　　　　　　　(5)

Here, the method of predicting the "monthly predicted electrical power of a specific electrical power load" may use a conventionally used technique such as the least square method or moving average method by using the sample data stored in sample data accumulation unit 11. Moreover, a technique may also be employed that uses a neural network indicated in, for example, Japanese Patent Application No. 4-372046. In addition, the value obtained by determining the average electrical power used per day by dividing the total of the sample data accumulated in sample data accumulation unit 11 by the number of days of the sample data accumulation period, and then multiplying the total number of days of the current month by that amount of electrical power may be taken to be the monthly predicted electrical power. The "actual amount of electrical power used by a specific electrical power load" is the actual amount of electrical power used in a specific electrical power load from the beginning of the month to the current day.

In addition, interruptible electrical power arithmetic processing unit 12 judges that the electrical power adjustment has reached the threshold and outputs a threshold warning generation signal in the case the difference between the predicted amount of electrical power used by the total electrical power load calculated in used electrical power prediction arithmetic processing unit 4 and the target amount of electrical power of the total electrical power load input to setting input storage unit 1 has exceeded the interruptible electrical power calculated according to formula (5), namely when the relationship of formula (6) shown below is valid.

$$\text{Predicted electrical power of total electrical power load}$$

$$- \text{ target electrical power of total electrical power load}$$

$$> \text{ interruptible electrical power} \qquad (6)$$

Alternatively, interruptible electrical power arithmetic processing unit 12 may output a threshold warning generation signal in the case the relationship of formula (6) is valid using the adjusted electrical power calculated with adjusted electrical power arithmetic processing unit 5 and the calculated interruptible electrical power.

$$\text{Adjusted electrical power} > (\text{interruptible electrical}$$

$$\text{power/remaining electrical power adjustment period}) \qquad (6')$$

Furthermore, the "remaining electrical power adjustment period" is as was explained in adjusted electrical power arithmetic processing unit 5, and similarly determines the remaining period during electrical power can be adjusted.

Reference symbol 13 indicates a warning generation unit that generates a warning generation signal output from demand control unit 9, or a threshold warning generation signal output from interruptible electrical power arithmetic processing unit 12.

In this manner, since the electricity charge management apparatus shown in Fig. 1 calculates a target value corresponding to a load pattern of a managed electrical power load, controls the amount of electrical power used in the electrical power load based on this target value, and generates a warning, electricity charges can be managed according to the amount of electrical power used by an electrical power load that changes with time during the course of a day.

On the other hand, there are also cases of managing electricity charges of an electrical power load for which it is difficult to obtain a fixed load pattern as in the manner of the electrical power load of, for example, an ordinary home, and there are also times when it is not desirable to manage electricity charges according to a load pattern (such as when the amount of electrical power used increases for some reason late at night when the amount of electrical power used is normally low). In such cases, the electricity charge management apparatus shown in Fig. 1 does not manage electricity charges based on a demand period target value calculated by demand period target value arithmetic processing unit 8, but rather manages electricity charges based on the monthly predicted electrical power calculated by used electrical power prediction arithmetic processing unit 4.

The management described above is performed in cases applicable to any of (1) through (3) indicated below:

(1) when instructed by a user that electricity charges are not to be managed based on load pattern;
(2) at times other than the control time band in cases when the control time band has been set by the user; and,

(3) when the average value of sample data is lower than the minimum electrical power.

In the above cases, the electricity charge management apparatus of Fig. 1 does not control the load by demand period target value arithmetic processing unit 8 and demand control unit 9, but rather first multiplies the target coefficient output from target coefficient arithmetic processing unit 7 by the monthly predicted electrical power calculated in used electrical power prediction arithmetic processing unit 4. This value is then compared with the monthly target electrical power of the total electrical power load set in setting input storage unit 1, and in the case it is less than the above monthly target electrical power, outputs a warning generation signal to warning generation unit 13.

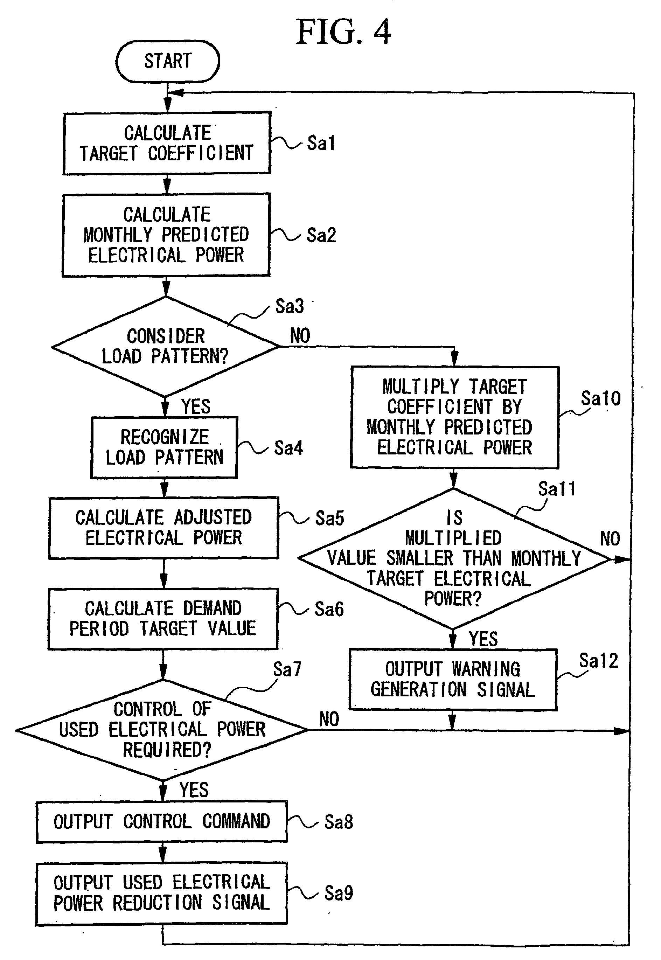

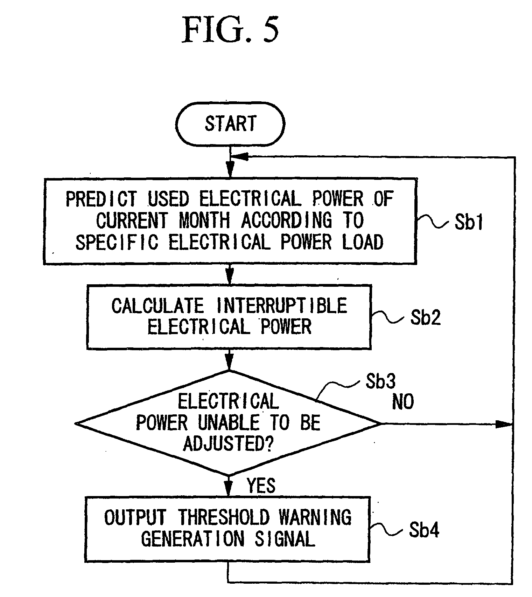

Next, an explanation is provided of the operation of the electricity charge management apparatus described above with reference to the flow chart of Figs. 4 and 5. Fig. 4 is a flow chart that shows the processing of electricity charge management performed based on the demand period target value calculated by demand period target value arithmetic processing unit 8. In addition, Fig. 5 is a flow chart showing the processing of electricity charge management performed based on the interruptible electrical power calculated by interruptible electrical power arithmetic processing unit 12. Furthermore, this processing is performed in parallel.

To begin with, an explanation is provided of the processing of electricity charge management based on the demand period target value with reference to Fig. 4. When electricity charge management processing based on a demand period target value is started, either the target coefficient input to setting input storage unit 1 according to a user's selection from target coefficient arithmetic processing unit 7, or the target coefficient corresponding to the measured value of sensor 6 in accordance with the relationship between the air temperature calculated based on the entered limiting conditions and the target coefficient, is first output to demand period target value arithmetic processing unit 8 (Step Sa1).

In addition, in used electrical power prediction arithmetic processing unit 4, the monthly predicted electrical power is calculated based on the sample data of sample data accumulation unit 2, and then output to adjusted electrical power arithmetic processing unit 5 (Step Sa2).

A judgment is then made as to whether or not a load pattern should be considered in performing electricity charge management in used electrical power prediction arithmetic processing unit 4 and demand period target value arithmetic processing unit 8, respectively (Step Sa3).

Namely, used electrical power prediction arithmetic processing unit 4 and demand period target value arithmetic processing unit 8 judge whether (1) electricity charge management has been directed by a user to be performed based on a load pattern, (2) a control time band has been set by a user and the current time is within that control time band, and (3) the average value of the sample data in the current demand period is greater than or equal to the minimum electrical power, and in the case any one of these is applicable, the judgement result is "Yes", and electricity charge management is performed in consideration of the load pattern. On the other hand, if none of the above (1) through (3) are applicable, the judgment result becomes "No", and electricity charge management is performed while not considering a load pattern. Here, the explanation continues on the assumption that the judgment result in Step Sa3 is "Yes".

If the judgment result in Step Sa3 is "Yes", the dissociation ratio of the current demand period is calculated by load pattern recognition unit 3 based on sample data accumulated in sample data accumulation unit 2 and the monthly target electrical power of the total electrical power load input to setting input storage unit 1 (Step Sa4).

Next, in adjusted electrical power arithmetic processing unit 5, the adjusted amount of electrical power is calculated based on the monthly predicted electrical power calculated by used electrical power prediction arithmetic processing unit 4 and the remaining electrical power adjustment time of the current month (Step Sa5).

Moreover, in demand period target value arithmetic processing unit 8, the demand period target value for the current demand period is calculated based on the average target electrical power and dissociation ratio determined in load pattern recognition unit 3, the adjusted amount of electrical power determined by adjusted electrical power arithmetic processing unit 5, and the target coefficient output from target coefficient arithmetic processing unit 7 (Step Sa6).

In demand control unit 9, the need for control of electrical power used by the electrical power load is judged using the above demand period target value (Step Sa7).

In the case control of electrical power used by the electrical power load is judged to be necessary, the judgment result of Step Sa7 becomes "Yes", and together with a warning generation signal being output from demand control unit 9 to warning generation unit 13, a control command is output to load control unit 10 for load control unit 10 (Step Sa8).

When load control unit 10 receives a control command from demand control unit 9, it outputs a signal to the electrical power load for reducing the electrical power used in that electrical power load in accordance with a prescribed electrical power control method.

When this processing is completed, the processing returns to Step Sa1 and when the next demand period is reached, a new target coefficient is output from target coefficient arithmetic processing unit 7.

As a result, a warning is emitted from warning generation unit 13 to a user that indicates that the predicted amount of electrical power used exceeds the demand period target value. In addition, the amount of electrical power supplied to a pre-assigned electrical power load or the amount of electrical power used is reduced corresponding to a used electrical power reduction signal in load control unit 10.

In addition, in the case the predicted amount of electrical power used is equal to or less than the demand period target value in Step Sa7, the judgment result of Step Sa7 becomes "No", and processing returns directly to Step Sa1, and when the next demand period is reached, a new target coefficient is output from target coefficient arithmetic processing unit 7.

When the judgment result in Step Sa3 is "No" as a result of none of the above (1) through (3) being applicable, the target coefficient output from target coefficient arithmetic processing unit 7 is multiplied by the monthly predicted electrical power calculated in Step Sa2 in used electrical power prediction arithmetic processing unit 4 (Step Sa10). Then, in used electrical power prediction arithmetic processing unit 4, the product of multiplying the monthly predicted electrical power and target coefficient is judged as to whether or not it is smaller than the monthly target electrical power with respect to the total electrical power load input to setting input storage unit 1 (Step Sa11).

At this time, if the product of multiplying monthly predicted electrical power and the target coefficient is smaller than the monthly target electrical power, then the judgment result of Step Sa11 becomes "Yes", and a warning generation signal is output from used electrical power prediction arithmetic processing unit 4 to warning generation unit 13. As a result, a warning is emitted from warning generation unit 13 to the user indicating that the predicted amount of electrical power used exceeds the demand period target value (Step Sa12). The processing then returns to Step Sa1 again, and when the next demand period is reached, a new target coefficient is output from target coefficient arithmetic processing unit 7.

On the other hand, in the case the product of multiplying monthly predicted electrical power and the target coefficient is greater than or equal to the monthly target electrical power, the judgment result of Step Sa11 becomes "No", processing returns directly to Step Sa1 and when the next demand period is reached, a new target coefficient is output from target coefficient arithmetic processing unit 7.

Next, an explanation is provided of electricity charge management processing based on interruptible electrical power with reference to Fig. 5. To begin with, when said processing is started, the amount of electrical power used from the beginning of the month to the end of that month by a specific electrical power load is predicted in interruptible electrical power arithmetic processing unit 12 based on the sample data accumulated in sample data accumulation unit 11 (Step Sb1).

Moreover, the interruptible amount of electrical power in a specific electrical power load is calculated in interruptible electrical power arithmetic processing unit 12 based on the predicted amount of electrical power used by a specific electrical power load and the interruption ratio set in setting input storage unit 1 (Step Sb2).

Interruptible electrical power arithmetic processing unit 12 then judges whether or not the electrical power adjustment has reached the threshold, namely whether or not electrical power can be adjusted, by using the calculated interruptible amount of electrical power (Step Sb3). As an example of this judgment, this judgment is made by determining whether or not the difference between the monthly predicted electrical power of the total electrical power load calculated with used electrical power prediction arithmetic processing unit 4 and the monthly target electrical power of the total electrical power load set in setting input storage unit 1 exceeds the interruptible electrical power calculated in Step Sb1.

In the case the electrical power adjustment has reached the threshold, the judgment result becomes "Yes", and a threshold warning generation signal is output from interruptible electrical power arithmetic processing unit 12 to warning generation unit 13 (Step Sb4). As a result, a new target coefficient is output from target coefficient arithmetic processing unit 7. Processing then returns to Step Sb1 and when the next demand period is reached, a new interruptible amount of electrical power is calculated in interruptible electrical power arithmetic processing unit 12. On the other hand, in the case the difference between the predicted amount of electrical power used and the monthly target electrical power has not exceeded the interruptible amount of electrical power, the judgment result becomes "No", and processing returns directly to Step Sb1.

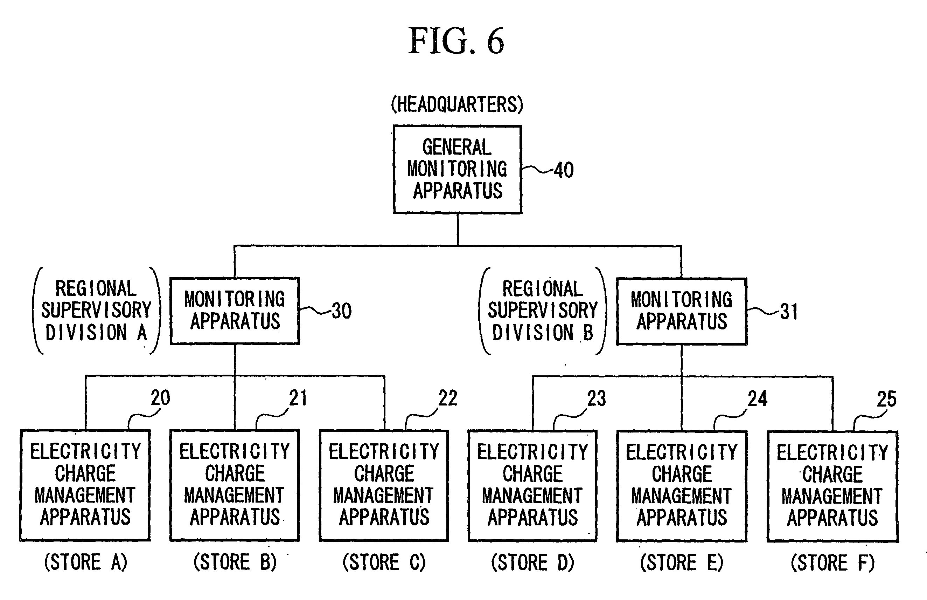

Next, an explanation is provided of a total electricity charge management system that collectively performs management of electricity charges of the electrical power loads installed at a plurality of facilities from a remote location using the previously described electricity charge management apparatus with reference to Fig. 6. Fig. 6 is a drawing showing the composition of a total electricity charge management system in the case of collectively managing the electricity charges of individual stores at a company headquarters. In this drawing, reference symbols 20 through 26 indicate the electricity charge management apparatus shown in Fig. 1 that are installed at each Store A through Store F and manage the electricity charges at each store.

Reference symbols 30 and 31 indicate monitoring apparatuses respectively installed at regional supervisory divisions that are each connected to the electricity charge management apparatus installed at each store in the region supervised by each regional supervisory division by a communication means such as a telephone line or wide-area radio network. The monthly target electrical power designated by a general monitoring apparatus to be described later is assigned to each supervised electricity charge management apparatus in accordance with a preset distribution ratio (to be referred to as the store distribution ratio). As a result, each electricity charge management apparatus manages the electricity charges of each store based on the monthly target electrical power assigned from a monitoring apparatus.

In addition, monitoring apparatuses 30 and 31 respectively total the predicted amount of electrical power used calculated in used electrical power prediction arithmetic processing unit 4 and the interruptible amount of electrical power calculated with interruptible electrical power arithmetic processing unit 12 of each supervised electricity charge management apparatus, and transmits that total to general monitoring apparatus 40. Moreover, in the case a threshold warning signal is output from interruptible electrical power arithmetic processing unit 12 of a supervised electricity charge management apparatus, that threshold warning signal is also transmitted to general monitoring apparatus 40.

The target value of the electrical power used in one month by all affiliated stores (here, Stores A through F) (to be referred to as the total monthly target electrical power) and the distribution ratio for assigning this total monthly target electrical power in units of regional supervisory divisions (to be referred to as the regional supervisory division distribution ratio) are set by a user in general monitoring apparatus 40. The total monthly target electrical power is then assigned to each monitoring apparatus 30 and 31 in accordance with the set distribution ratio.

In addition, in the case a threshold warning signal is transmitted from either monitoring apparatus 30 or 31, the regional supervisory division distribution ratio is increased for the regional supervisory division that transmitted the threshold warning signal within a range over which the relationship of formula (7) below is valid based on the predicted electrical power, interruptible electrical power and set total monthly target electrical power sent from each monitoring apparatus 30 and 31. Namely, the overall amount of electrical power used is adjusted by lowering the regional supervisory division distribution ratio having a surplus of electrical power, and raising the regional supervisory division distribution ratio of the regional supervisory division that sent the threshold warning signal, namely the regional supervisory division that does not have a surplus of electrical power.

$$\text{(Predicted electrical power - interruptible electrical}$$

$$\text{power of monitoring apparatus 30) + (predicted electrical}$$

$$\text{power - interruptible electrical power of monitoring}$$

$$\text{apparatus 31) < total monthly target electrical power} \qquad (7)$$

Furthermore, adjustment of the store distribution ratio is also performed by each monitoring apparatus 30 and 31 in the same manner as adjustment of the regional supervisory division distribution ratio described above.

Moreover, the regional supervisory division distribution ratio can be adjusted by employing measures such as setting the target coefficients or interruption ratios of monitoring apparatuses 30 and 31 with general monitoring apparatus 40 to adjust the days on which the stores are not open for business.

Similarly, electricity charge management may also be performed in general monitoring apparatus 40 by calculating or converting the total monthly target electrical power using past results and so forth from long-term total target electrical power, long-term or monthly total target electricity charges, or long-term or monthly total target carbon dioxide level, and distributing the total target electrical power to each regional supervisory division 30 and 31 based on the regional supervisory division distribution ratio.

According to the above total electricity charge management system, electricity charges can be suitably managed for Stores A through F simply by setting the long-term or monthly total target electrical power, total target electricity charge or total target carbon dioxide level, as well as the regional supervisory division distribution ratio, at a company headquarters.

In addition, the electricity charge management system of Fig. 6 supervises a plurality of electricity charge management apparatuses 20 through 25 by a multilevel composition in which monitoring apparatuses 30 and 31 are respectively provided that supervise the electricity charge management apparatuses under the control of each regional supervisory division that supervises several stores on a network, and general monitoring apparatus 40 is provided that supervises monitoring apparatuses 30 and 31 under the control of a headquarters that supervises each regional supervisory division. Accordingly, the electricity charge management system is able to distribute processing for supervising a plurality of electricity charge management apparatuses 20 through 25 among each monitoring apparatus 40, 30 and 31. Accordingly, reduction of the processing volume of each monitoring apparatus 40, 30 and 31, and simplification of the program for these apparatuses, can be performed easily.

Furthermore, in the present embodiment, a program for realizing the composition shown in Fig. 1, excluding sensor 6, and the functions of monitoring apparatuses 30 and 31 as well as general managing apparatus 40 shown in Fig. 6, may be recorded onto a computer-readable recording medium, the program recorded on this recording medium may be read into a computer system, and electricity charge management may be performed by running that program.

Here, the above "computer system" includes hardware such as an OS and peripherals, and a web site providing environment (or display environment) in the case it uses a WWW system. In addition, the "computer-readable recording medium" refers to a portable medium such as a floppy disk, magnetooptical disk, ROM or CD-ROM, or a storage apparatus such as a hard disk contained within the computer. Moreover, the "computer-readable recording medium" also includes that which retains a program for a fixed period of time in the manner of volatile memory (RAM) within a computer system composed of servers and clients in the case programs are transmitted via a communication line such as the Internet or other network or a telephone line.

In addition, the above program may be transferred from the computer system that stores the program in a storage apparatus and so forth to another computer system via a transfer medium or by transfer waves within the transfer medium. Here, the "transfer medium" that transfers the program refers to a medium having a function that transfers information in the manner of a network such as the Internet (communication network) or a telephone line (communication line).

In addition, the above program may be that for realizing a part of the above functions, or that which realizes the above functions by combining a previously recorded program with the computer system, namely a so-called differential file (differential program).

As has been explained above, according to the present invention, electricity charges can be managed by setting a target value for electricity charges in a facility, or for the amount of electrical power used or $CO_2$ of the total electrical power load, in a prescribed time period in monthly or yearly units, and controlling the amount of electrical power used and maximum electrical power of the electrical power load based on that target value.

**Claims**

1. An electricity charge management apparatus, comprising:

   a setting means that sets a target value of an amount of electrical power used during a prescribed time period by an electrical power load,
   a used electrical power accumulation means that accumulates the value of the amount of electrical power used in a unit time obtained by fractionating said prescribed time period by said electrical power load,
   a unit time target value arithmetic processing means that calculates the target value of the amount of electrical power used for each unit time based on the target value of the amount of electrical power used during said prescribed time period and the amount of electrical power used of each unit time, and
   a load control means that controls the amount of electrical power used by said electrical power load based on said calculated target value of the amount of electrical power used during each unit time.

2. The electricity charge management apparatus according to claim 1, further comprises:

   a dissociation ratio calculating means that calculates the dissociation ratio, which is the ratio of the target amount of electrical power during each unit time to the average amount of electrical power used of the unit time, based on said target value of the amount of electrical power used during said prescribed time period and the value of the amount of electrical power used during each said unit time, wherein
   said unit time target value arithmetic processing means calculates the target value of the amount of electrical power used during each unit time while also considering said dissociation ratio.

3. The electricity charge management apparatus according to claim 1, further comprises:

   a used electrical power prediction means that predicts the amount of electrical power used during said prescribed time period by said electrical power load based on the value of the amount of electrical power used during each said unit time, and
   an adjusted electrical power calculation means that calculates the adjusted amount of electrical power based on the difference between said predicted amount of electrical power used and said target value of the amount of electrical power used during said prescribed time period, and the remaining electrical power adjustment time, wherein
   said unit time target value arithmetic processing means calculates the target value of the amount of electrical power used during each unit time while considering said adjusted amount of electrical power.

4. The electricity charge management apparatus according to claim 1, wherein,
   a coefficient that considers the environmental conditions of the facility is additionally set in said setting means, and said unit time target value arithmetic processing means calculates the target value of the amount of electrical power used during each unit time based on the target value of the amount of electrical power used during said prescribed time period, the amount of electrical power used during each unit time, and said coefficient that considers the environmental conditions of the facility, and

said electricity charge management apparatus further comprises:

a load control means that controls the amount of electrical power used by said electrical power load based on said calculated target value of the amount of electrical power used during each unit time.

5. The electricity charge management apparatus according to claim 4, further comprises:

a limiting condition setting means that sets limiting conditions consisting of the upper and lower limit values of said coefficient that considers the environmental conditions of the facility, and the status in said installed facility corresponding to said upper and lower limit values, and

a coefficient calculation means that calculates said coefficient that considers the environmental conditions of the facility corresponding to the status as detected by a detection means that detects the status in the installed facility of said electrical power load, wherein

the coefficient calculated by said coefficient calculation means is set as a coefficient that considers the environmental conditions of the facility.

6. The electricity charge management apparatus according to any of claims 1 through 5, further comprises:

a specific electrical power load setting means that sets an interruption ratio that represents the ratio at which supplied electrical power can be interrupted according to a specific electrical power load among said electrical power load,

a specific electrical power load electrical power accumulation means that accumulates the value of the amount of electrical power used during each unit time by said specific electrical power load, and

an interruptible electrical power arithmetic processing means that predicts the amount of electrical power used during said prescribed time period by said specific electrical power load by using the value of the amount of electrical power accumulated in said specific electrical power load electrical power accumulation means, and calculates the interruptible amount of electrical power for which electrical power supplied to said specific electrical power load can be interrupted from the current time until expiration of a prescribed time period based on said predicted amount of electrical power used and said interruption ratio, while additionally judging whether or not electrical power adjustment has reached a threshold by using said interruptible amount of electrical power, and generating a warning in the case the threshold is judged to have been reached.

7. The electricity charge management apparatus according to claim 7 wherein,

in the case long-term electricity charge has been set for said target value, said electricity charge is assigned to each prescribed time period in said prescribed time period units, and the target value of the electricity charge of each said assigned prescribed time period is converted to an amount of electrical power after which the amount of electrical power used by said electrical power load is controlled based on said converted amount of electrical power.

8. A monitoring apparatus that manages a plurality of the electricity charge management apparatuses according to claim 6, comprising:

a means of assigning a target value of a prescribed time period to each electricity charge management apparatus in accordance with a preset distribution ratio by setting a target value of a prescribed time period that summarizes each target value set in the plurality of electricity charge management apparatuses, and

a means of changing said distribution ratio based on each predicted amount of electrical power predicted by said plurality of electricity charge management apparatuses, each interruptible amount of electrical power calculated by said plurality of electricity charge management apparatuses, and each target value of said prescribed time period.

9. An electricity charge management system comprised by: a plurality of the electricity charge management apparatuses according to claim 6, a plurality of monitoring apparatuses that manage said plurality of electricity charge management apparatuses, and a general monitoring apparatus that summarily manages said plurality of monitoring apparatuses, wherein

said monitoring apparatuses comprise:

a means of assigning a target value of a prescribed time period that summarizes each target value set in the plurality of electricity charge management apparatuses to be monitored, that is assigned to each electricity charge management apparatus in accordance with a preset distribution ratio by setting a target value of a prescribed time period assigned by said general monitoring apparatus, and

a means of changing said distribution ratio based on each predicted amount of electrical power predicted by said plurality of electricity charge management apparatuses to be monitored, each interruptible amount of electrical power calculated by said plurality of electricity charge management apparatuses, and each target value of said prescribed time period; and,

said general monitoring apparatus comprises:

a means of assigning a target value of a prescribed time period to each monitoring apparatus in accordance with a preset distribution ratio by setting a target value of a prescribed time period that summarizes each target value set with said plurality of monitoring apparatuses, and

a means of changing said distribution ratio for each monitoring apparatus based on the predicted amount of electrical power and each interruptible amount of electrical power sent from said plurality of monitoring apparatuses, and each target value of a prescribed time period that summarizes each target value set with said plurality of monitoring apparatuses; wherein,

said plurality of electricity charge management apparatuses, said plurality of monitoring apparatuses and said general monitoring apparatus are connected so as to be able to communicate.

**10.** A computer-readable recording medium on which an electricity charge management program has been recorded that manages electricity charges according to the amount of electrical power used during a prescribed time period by an electrical power load; wherein,

said electricity charge management program runs in a computer:

a step for accumulating the value of the amount of electrical power used in a unit time obtained by fractionating said prescribed time period by said electrical power load,

a step for calculating the target value of the amount of electrical power used during each unit time based on a set target value of the amount of electrical power used during said prescribed time period, a coefficient that considers the environmental conditions of a facility, and the amount of electrical power used during each unit time, and

a step for controlling the amount of electrical power used by said electrical power load based on said calculated target value of the amount of electrical power used during each unit time.

**11.** An electricity charge management program that manages electricity charges according to the amount of electrical power used during a prescribed time period by an electrical power load; wherein,

said program is for running in a computer:

a step for accumulating the value of the amount of electrical power used in a unit time obtained by fractionating said prescribed time period by said electrical power load,

a step for calculating the target value of the amount of electrical power used during each unit time based on a set target value of the amount of electrical power used during said prescribed time period, a coefficient that considers the environmental conditions of a facility, and the amount of electrical power used during each unit time, and

a step for controlling the amount of electrical power used by said electrical power load based on said calculated target value of the amount of electrical power used during each unit time.

FIG. 1

# FIG. 2

AVERAGE TARGET ELECTRICAL POWER: 100 Kwh
MINIMUM ELECTRICAL POWER: 60 Kwh

| | SAMPLE DATA ACCUMULATION PERIOD | | | | | SAME-TIME SAMPLE DATA AVERAGE VALUE | DISSOCIATION RATIO |
|---|---|---|---|---|---|---|---|
| | 7 DAYS AGO | 6 DAYS AGO | ......... | 2 DAYS AGO | 1 DAY AGO | | |
| 9:00~9:30 | 100 | 80 | ......... | 59 | 120 | 90 | 90% |
| 9:30~10:00 | 105 | 92 | ......... | 62 | 127 | 97 | 97% |
| 10:00~10:30 | 110 | 116 | ......... | 80 | 132 | 110 | 110% |
| 10:30~11:00 | 108 | 118 | ......... | 95 | 140 | 120 | 120% |
| ⋮ | ⋮ | ⋮ | | ⋮ | ⋮ | ⋮ | ⋮ |
| 8:30~9:00 | 96 | 78 | ......... | 52 | 107 | 87 | 87% |

EP 1 271 740 A1

FIG. 3

# FIG. 4

START

↓

CALCULATE TARGET COEFFICIENT — Sa1

↓

CALCULATE MONTHLY PREDICTED ELECTRICAL POWER — Sa2

↓

CONSIDER LOAD PATTERN? — Sa3

NO → MULTIPLY TARGET COEFFICIENT BY MONTHLY PREDICTED ELECTRICAL POWER — Sa10

YES ↓

RECOGNIZE LOAD PATTERN — Sa4

↓

CALCULATE ADJUSTED ELECTRICAL POWER — Sa5

↓

CALCULATE DEMAND PERIOD TARGET VALUE — Sa6

↓

CONTROL OF USED ELECTRICAL POWER REQUIRED? — Sa7

YES ↓

OUTPUT CONTROL COMMAND — Sa8

↓

OUTPUT USED ELECTRICAL POWER REDUCTION SIGNAL — Sa9

From Sa10 ↓

IS MULTIPLIED VALUE SMALLER THAN MONTHLY TARGET ELECTRICAL POWER? — Sa11

NO →

YES ↓

OUTPUT WARNING GENERATION SIGNAL — Sa12

# FIG. 5

```
        ┌─────────┐
        │  START  │
        └─────────┘
             │
             ▼
┌──────────────────────────────┐
│ PREDICT USED ELECTRICAL POWER OF │
│   CURRENT MONTH ACCORDING TO     │ ～ Sb1
│  SPECIFIC ELECTRICAL POWER LOAD  │
└──────────────────────────────┘
             │
             ▼
┌──────────────────────────┐
│  CALCULATE INTERRUPTIBLE   │ ～ Sb2
│     ELECTRICAL POWER       │
└──────────────────────────┘
             │
             ▼
        ╱ELECTRICAL╲      ～ Sb3
      ╱  POWER UNABLE TO BE ╲   NO
      ╲    ADJUSTED?        ╱ ────────►
        ╲              ╱
             │ YES
             ▼
┌──────────────────────────┐
│  OUTPUT THRESHOLD WARNING  │ ～ Sb4
│    GENERATION SIGNAL       │
└──────────────────────────┘
```

# FIG. 6

(HEADQUARTERS)

```
GENERAL
MONITORING    ~40
APPARATUS
```

( REGIONAL
  SUPERVISORY
  DIVISION A )  MONITORING
               APPARATUS   ~30

( REGIONAL
  SUPERVISORY
  DIVISION B )  MONITORING
               APPARATUS   ~31

20                21                22                23                24                25

| ELECTRICITY | ELECTRICITY | ELECTRICITY | ELECTRICITY | ELECTRICITY | ELECTRICITY |
| CHARGE | CHARGE | CHARGE | CHARGE | CHARGE | CHARGE |
| MANAGEMENT | MANAGEMENT | MANAGEMENT | MANAGEMENT | MANAGEMENT | MANAGEMENT |
| APPARATUS | APPARATUS | APPARATUS | APPARATUS | APPARATUS | APPARATUS |

(STORE A)        (STORE B)        (STORE C)        (STORE D)        (STORE E)        (STORE F)

EP 1 271 740 A1

## INTERNATIONAL SEARCH REPORT

International application No.

PCT/JP01/01767

A. CLASSIFICATION OF SUBJECT MATTER
Int.Cl⁷ H02J 3/00

According to International Patent Classification (IPC) or to both national classification and IPC

B. FIELDS SEARCHED

Minimum documentation searched (classification system followed by classification symbols)
Int.Cl⁷ H02J 3/00

Documentation searched other than minimum documentation to the extent that such documents are included in the fields searched
Jitsuyo Shinan Koho      1926-1996    Toroku Jitsuyo Shinan Koho   1994-2001
Kokai Jitsuyo Shinan Koho   1971-2001    Jitsuyo Shinan Toroku Koho   1996-2001

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP, 8-237864, A (Hitachi Ltd.),<br>13 September, 1996 (13.09.96),<br>Claims<br>Par. Nos. [0004] to [0008], [0016] to [0018], [0022]<br>(Family: none) | 1,3,7-9<br>4-6,10,11 |
| Y | JP, 9-009502, A (Mitsubishi Electric Corporation),<br>10 January, 1997 (10.01.97),<br>Claims<br>Par. Nos. [0005], [0009], [0016] to [0020], [0055] to<br>[0057], [0108]<br>(Family: none) | 4-6,10,11 |
| A | JP, 10-197563, A (Yakii K.K.),<br>31 July, 1998 (31.07.98),<br>(Family: none) | 1-11 |

☐ Further documents are listed in the continuation of Box C.    ☐ See patent family annex.

| * | Special categories of cited documents: | "T" | later document published after the international filing date or |
|---|---|---|---|

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
04 June, 2001 (04.06.01)

Date of mailing of the international search report
12 June, 2001 (12.06.01)

Name and mailing address of the ISA/
Japanese Patent Office

Authorized officer

Facsimile No.

Telephone No.

Form PCT/ISA/210 (second sheet) (July 1992)

24